# EUROPÄISCHE PATENTSCHRIFT

(11) **EP 1 883 149 B1**
(45) Veröffentlichungstag und Bekanntmachung des Hinweises auf die Patenterteilung: **09.01.2019**
(21) Anmeldenummer: 07113009.0
(22) Anmeldetag: 24.07.2007
(51) Int. Cl.: H02K 15/02

(54) **Radiale Zentrierfläche eines Ständerkerns**
Radial centring surface of a stator core
Surface de centrage radial d'une carcasse statorique

(30) Priorität: 24.07.2006 DE 102006034109
(43) Veröffentlichungstag der Anmeldung: 30.01.2008
(73) Patentinhaber: SEG Automotive Germany GmbH, 70499 Stuttgart (DE)
(72) Erfinder: Rau, Eberhard, 70825, Korntal-Muenchingen (DE); Berger, Thomas, 71254, Ditzingen (DE); Henne, Martin, 71696, Moeglingen (DE); Pflueger, Klaus, 71735, Eberdingen (DE); Berry, Rob, Mid Glamorgan, South Wales CF31 4 PW (GB)
(74) Vertreter: Steinbauer, Florian

(56) Entgegenhaltungen:
- EP-A1- 0 210 576
- WO-A1-2004/032307
- WO-A1-2005/064765
- DE-B- 1 116 310
- JP-A- S5 649 654
- US-A- 6 147 431

## Beschreibung

Die Erfindung betrifft eine Vorrichtung und ein Verfahren zum Herstellen mindestens einer radialen Zentrierfläche an einem Außenumfang eines ringförmigen Lamellenpakets eines Ständers für eine elektrische Maschine, sowie eine nach diesem Verfahren hergestellte elektrische Maschine und einen nach diesem Verfahren hergestellten Ständer für eine elektrische Maschine.

### Stand der Technik

Bei der sogenannten Axialspanntechnik, die bei elektrischen Maschinen wie beispielsweise einem Kraftfahrzeug-Generator verwendet wird, ist sowohl eine sichere axiale Lage des Ständers zu den Lagerschilden des Generators, als auch eine genaue zentrische Anordnung zum im Ständer angeordneten Läufer erforderlich. Durch eine Zentrierfläche an einem Außenumfang des Lamellenpakets wird eine äußerst exakte Anordnung des Ständers in den Lagerschilden und eine äußerst exakte Zuordnung zu dem Läufer ermöglicht.

Es sind Verfahren zum Herstellen einer solchen radialen Zentrierfläche aus dem Stand der Technik bekannt. Die Offenlegungsschrift DT 23 44 193 A1 offenbart ein Verfahren, bei dem die Zentrierfläche durch plastische Verformung erstellt wird. Dabei können beim Öffnen des verwendeten Prägewerkzeugs einzelne Lamellen des Lamellenpakets oder Bereiche davon am Werkzeug hängen bleiben und vom Lamellenpaket abgezogen werden. Durch die verbogenen Lamellen ist die Zentrierfläche beschädigt und der Ständer nicht mehr verbaubar. Da die Beschädigung am Ende der Wertschöpfungskette auftritt, sind die Ausschusskosten entsprechend hoch.

Aus der WO 2004/030185 ist eine spanende Bearbeitung durch ein Abdrehen einer Zentrierfläche bekannt. Dabei kann es passieren, dass sich eine oder mehrere Lamellen aufgrund der hohen radialen Belastung von dem Lamellenpaket lösen.

Die JP S56 49654 A zeigt einen Stator mit einem Lamellenpaket mit einer halbkreisförmigen Ausbuchtung an einem abgeschnittenen Abschnitt. An der Ausbuchtung kann ein Motorkern angebracht werden.

Die EP 0 210 576 A1 zeigt einen mehrfach einsetzbaren Schneideinsatz zum spanabhebenden Bearbeiten von Metall.

Die WO 2004/032307 A1 zeigt einen Ständerkern, wobei eine Ständerblechlamelle an ihrem Außenumfang einen Absatz aufweist, der als Sitz in einem Gehäuse einer elektrischen Maschine dient. Der Absatz ist durch Drehen eingearbeitet.

Gemäß der US 6 147 431 A wird ein Stator hergestellt, indem aus einem Stahlblech Streifen mit Zähnen und Kerben ausgestanzt und um einen Zylinder aufgewickelt werden.

Die WO 2005/064765 A1 beschreibt ein Verfahren zum Herstellen eines Ständerkerns, wobei ein ringförmiges Lamellenpaket in Axialrichtung plastisch verformt wird und wobei durch die plastische Verformung ein radialer Gehäuseeinpass gebildet wird.

Aus der DE 11 163 10 AS ist bekannt, fertig geschichtete Dynamoblechpakete für elektrische Maschinen zu Überdrehen. Es entsteht somit ein formloser Stoff (Span) als Abfall.

### Offenbarung der Erfindung

Das erfindungsgemäße Verfahren sieht vor, dass die Zentrierfläche durch Abschneiden erstellt wird und dass das Lamellenpaket vor dem Abschneiden axial vorgespannt. Der Vorteil liegt in der Vermeidung unzulässiger plastischer Verformungen, wie zum Beispiel ein Auffächern der Lamellen und/oder in der Beschädigung einer oder mehrerer Lamellen beim Zurückfahren des Schneidwerkzeugs.

Das Abschneiden ist ein Abtrennen eines Teils von einem Rohteil oder einem Halbfertigteil ohne die Entstehung von formlosen Stoff (Span). Das heißt, dass nach einem Abschneidvorgang sowohl das Werkstück als auch das davon abgetrennte, beziehungsweise abgeschnittene Teil eine definierte Form aufweisen. Bei einem Abschneiden wird durch einen einzigen Arbeits- beziehungsweise Schneidvorgang ein erwünschtes Endergebnis erzielt.

Vorteilhafterweise wird das Abschneiden an einer Stirnfläche des Lamellenpakets im Wesentlichen in axialer Richtung durchgeführt. Dies bietet den Vorteil, dass auf der Stirnfläche durch das Abschneiden kein Grat entsteht, der beim Einbau in ein Lagerschild an der gemeinsamen Anlagefläche stören könnte, und dass das Lamellenpaket an der Stirnseite in axialer Richtung zusätzlich plastisch verformt wird, sodass die Elastizität beziehungsweise Nachgiebigkeit des Lamellenpakets in Axialrichtung, insbesondere im Zusammenhang mit der Verschraubung zwischen zwei Lagerschilden, deutlich verringert und somit die Befestigung zwischen den beiden Lagerschilden verbessert wird, da elastisch verformbare Anteile des Lamellenpakets durch die plastische Verformung verringert worden sind. Weist das Lamellenpaket am Außenumfang nach Außen zeigende, über die gesamte Breite des Lamellenpakets ausgebildete Zähne auf, so setzt sich die radiale Zentrierfläche aus jeweils an den Zähnen ausgebildeten Zahnzentrierflächen zusammen.

Nach einer Weiterbildung der Erfindung wird zum Abschneiden mindestens ein Schneidwerkzeug mit mindestens einer ring- oder bogenförmigen Schneide verwendet. Dadurch wird bei einem Abschneidvorgang ein gewünschter Radius der Zentrierflächen am Außenumfang des Lamellenpakets auf einfache Art und Weise ermöglicht. Natürlich wäre es auch möglich, ein Schneidwerkzeug mit einer geraden Schneide zu verwenden, wobei dann mit zunehmender gewünschter Rundheit der Zentrierfläche wesentlich mehr Abschneidvorgänge notwendig sind. Bei Verwendung einer ringförmigen Schneide reicht ein einziger Abschneidvorgang aus, um die gesamte Zentrierfläche zu erstellen. Bei Verwendung einer bogenförmigen Schneide sind vorteilhafterweise mehrere Schneidwerkzeuge über den Außenumfang des Lamellenpakets verteilt angeordnet, die gleichzeitig eine Schnittbewegung ausführen. Das Lamellenpaket und/oder das Werkzeug werden dabei zweckmäßigerweise nach einem Schnittvorgang, sei es mit einem oder mit mehreren Schneidwerkzeugen, um einen bestimmten Drehwinkel gedreht, sodass die Zentrierfläche am gesamten Außenumfang hergestellt wird. Entspricht die Zahl der Schneidwerkzeuge der Zahl der nach außen zeigenden Zähne des Lamellenpakets, ist dies natürlich nicht notwendig.

Vorteilhafterweise wird das Schneidwerkzeug parallel zu der Achse des Lamellenpakets geführt, sodass eine kreiszylinderförmige Zentrierfläche entsteht. Die so erstellte Zentrierfläche weist keinen Grat auf und kann somit problemlos in eine entsprechende Aufnahme eines Lagerschilds oder Gehäuses geführt werden.

Erfindungsgemäß wird das Werkzeug bei der Herstellung der kreiszylindrischen Zentrierfläche so weit bewegt, dass mindestens eine Lamelle des Lamellenpakets von der Schneide vollständig durchdrungen wird. Beim Abschneidvorgang werden also eine oder mehrere Lamellen jeweils vollständig geschnitten, wobei die Schneide nicht in eine Lamelle eindringt, ohne diese zu zerteilen, da sonst in der Lamelle, die in Schnittrichtung hinter der zuletzt abgeschnittenen Lamelle liegt, mit einer Kerbe versehen wird, die sich ungünstig auf die Stabilität, sowie die elektromagnetische Funktion des Ständers auswirkt.

Nach einer Weiterbildung der Erfindung wird das Schneidwerkzeug in einem Winkel zu der Achse des Lamellenpakets geführt, sodass eine kegelförmige Zentrierfläche entsteht. Die so gestaltete Zentrierfläche ermöglicht eine noch einfachere Montage und Zentrierung des Lamellenpakets an einem Lagerschild. Im Gegensatz zu der kreiszylinderförmig ausgebildeten Zentrierfläche kann hierbei nur die bogenförmige Schneide verwendet werden. Mit Zuführung des Schneidwerkzeugs in einem Winkel zu der Achse des Lamellenpakets, fährt die Schneide nachdem Abschneiden ins Freie. Hierbei ist es nicht notwendig, dass die Lamellen jeweils ganz über ihre gesamte Breite von der Schneide durchdrungen werden. Gegenüber der kreiszylinderförmig ausgebildeten Zentrierfläche wird ein Verkanten des Ständers beim Einführen in eine entsprechende Aufnahme eines Lagerschilds oder Gehäuses verhindert.

Nach einer Weiterbildung der Erfindung wird der Winkel zwischen der Zuführung des Schneidwerkzeugs und der Achse des Lamellenpakets kleiner als 5 Grad eingestellt. Dadurch wird eine einfache Herstellung der Zentrierfläche ermöglicht, und da die bearbeiteten Zentrierflächen innerhalb eines Lagerschilds oder Gehäuse liegt, gestalten sich Korrosionsschutzmaßnahmen für die bearbeitete Fläche weniger aufwendig.

Ferner betrifft die Erfindung einen Ständer für eine elektrische Maschine, insbesondere für eine elektrische Maschine eines Kraftfahrzeugs, mit einem ringförmigen, insbesondere zunächst quaderförmigen und nach Einbringen einer Ständerwicklung rundgebogenen, Lamellenpaket, wobei das Lamellenpaket, mindestens eine durch Abschneiden des axial vorgespannten Lamellenpakets hergestellte, radiale Zentrierfläche am Außenumfang aufweist. Wobei sich die Zentrierfläche bei einem Lamellenpaket, das über seine gesamte Breite radial nach Außen gerichtete Zähne aufweist, aus an den Zähnen erstellten Zentrierflächen zusammensetzt. Die Zentrierfläche ist dabei vorteilhafterweise dazu geeignet, den Ständer, beziehungsweise das Lamellenpaket, an beispielsweise einem Lagerschild oder einem Lagerflansch auszurichten. Weist der Ständer zwei erfindungsgemäße Zentrierflächen auf, so kann er beispielsweise zwischen zwei Lagerschilden eingespannt werden.

Weiterhin betrifft die Erfindung eine elektrische Maschine mit zwei Lagerschilden, beziehungsweise Lagerflanschen, und mit einem Ständer, wie er oben beschrieben wurde, wobei der Ständer axial zwischen den beiden Lagerschilden, beziehungsweise Lagerflanschen, eingespannt ist. Die Lagerschilde weisen dabei vorteilhafter weise zwei Ständeraufnahmen auf, die mit den Zentrierflächen des Ständers zusammenwirken.

Darüber hinaus betrifft die Erfindung eine Vorrichtung zum Herstellen einer radialen Zentrierfläche an einem Außenumfang eines ringförmigen Lamellenpakets eines Ständers, das axiale Stirnflächen aufweist, wobei die Vorrichtung ein zum Lamellenpaket im Wesentlichen axial bewegbares Schneidwerkzeug mit mindestens einer Schneide aufweist, die gegen eine der Stirnseiten des Lamellenpakets gerichtet ist. Erfindungsgemäß ist eine Axial-Vorspanneinrichtung für das Lamellenpaket vorgesehen, sodass das Lamellenpaket beim Schneidvorgang unter einer axialen Vorspannung steht, und dadurch unzulässige plastische Verformungen, wie zum Beispiel ein Auffächern der Lamellen und/oder die Beschädigung einer oder mehrerer Lamellen beim Zurückfahren des Schneidwerkzeugs vermieden werden.

Vorteilhafterweise weist die Vorrichtung eine Ständerzentrierung auf, mit der der Ständer zunächst ausgerichtet und für den folgenden Abschneidvorgang in Position gehalten wird. Bei dem Abschneidvorgang ergeben sich die Vorteile des oben beschriebenen Verfahrens. Vorteilhafterweise sind mindestens zwei Schneidwerkzeuge so angeordnet, dass Zentrierflächen gleichzeitig an beiden Seiten des Lamellenpakets erstellt werden.

Vorteilhafterweise ist die Schneide ringförmig ausgebildet, sodass durch eine einzige Abschneidbewegung, eine kreiszylinderförmige Zentrierfläche am gesamten Außenumfang des Lamellenpakets erstellt wird.

Nach einer Weiterbildung der Erfindung ist die Schneide bogenförmig ausgebildet, sodass die Zentrierfläche abschnittsweise erstellt wird. Dies ist insbesondere von Vorteil für die Ausbildung einer kegelförmigen Zentrierfläche, bei der die Zuführung des Schneidwerkzeugs in einem Winkel, der vorteilhafterweise kleiner als 5 Grad ist, zu der Achse des Lamellenpakets ausgerichtet ist.

Zweckmäßigerweise ist dazu die Ständeraufnahme mit dem Ständer und/oder das Schneidwerkzeug um die Lamellenpaketachse drehbar gelagert, sodass die Zentrierfläche abschnittsweise erstellt werden kann.

### Kurze Beschreibung der Zeichnungen

Im Folgenden soll die Erfindung anhand einiger Figuren näher erläutert werden. Dabei zeigen
- Figur 1: einen erfindungsgemäßen Ständer in einer Seitenansicht,
- Figur 2: den Ständer und Schneidwerkzeuge in einer Teilschnittdarstellung einer Draufsicht,
- Figur 3 a): eine Detailansicht der Zentrierfläche im Schnitt,

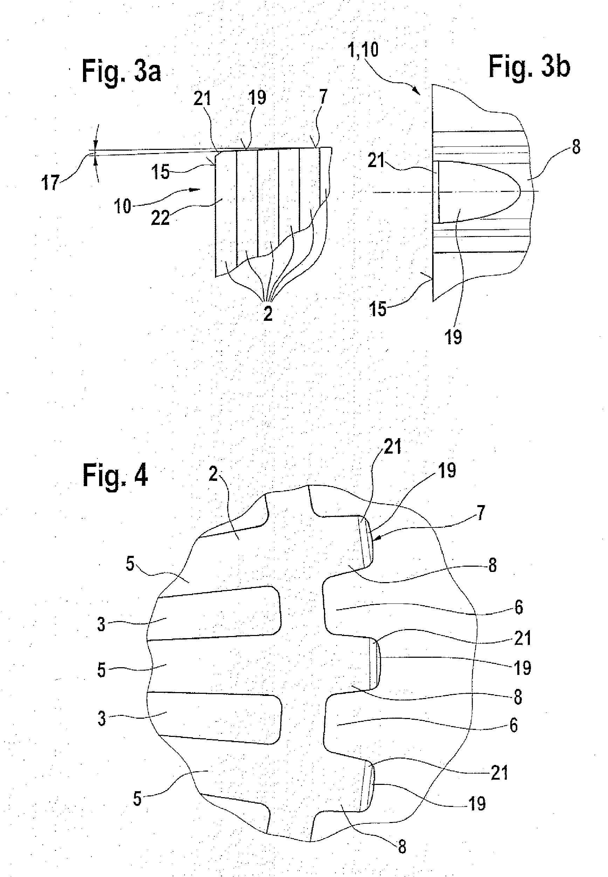

- Figur 3 b): eine Zentrierfläche in einer Draufsicht,
- Figur 4: eine Detail-Seitenansicht des Ständers,

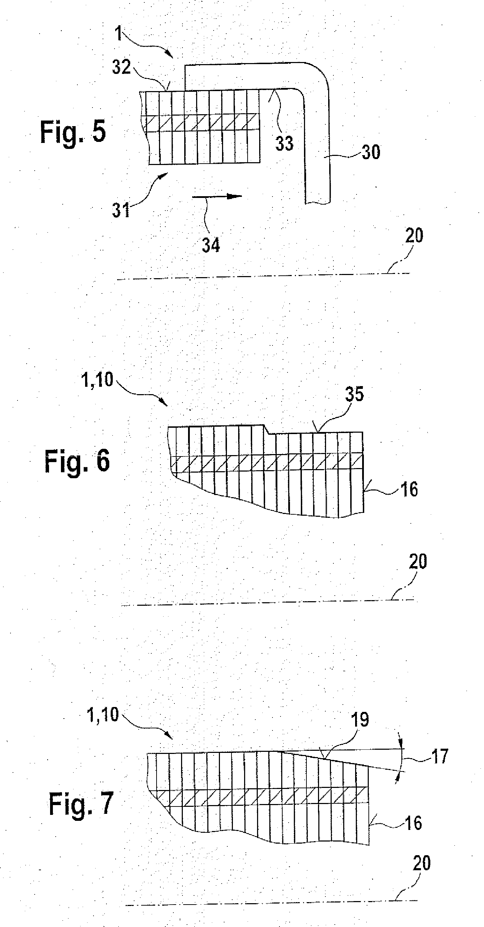

- Figur 5: eine Schnittdarstellung der Anordnung des Ständers an einem Gehäuse,
- Figur 6: eine kreiszylinderförmige Zentrierfläche in einer Schnittdarstellung,
- Figur 7: eine kegelförmige Zentrierfläche in einer Schnittdarstellung,

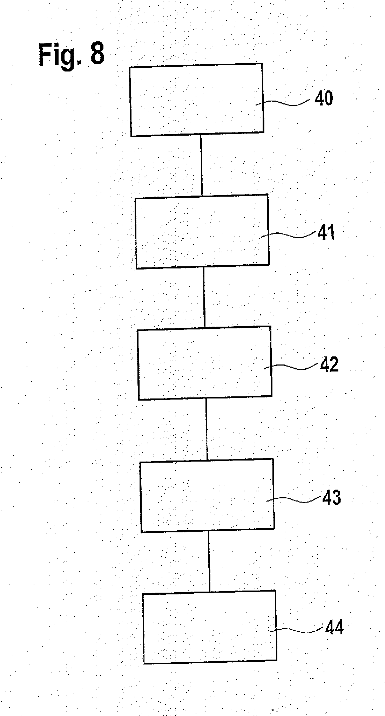

- Figur 8: Verfahrensschritte zur Herstellung der radialen Zentrierfläche,

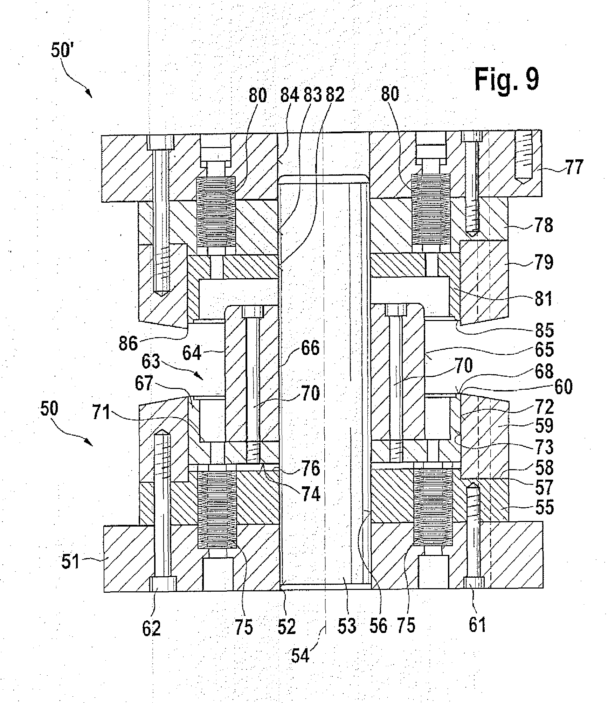

- Figur 9: eine Schnittdarstellung einer erfindungsgemäßen Vorrichtung zum Herstellen der Zentrierfläche,

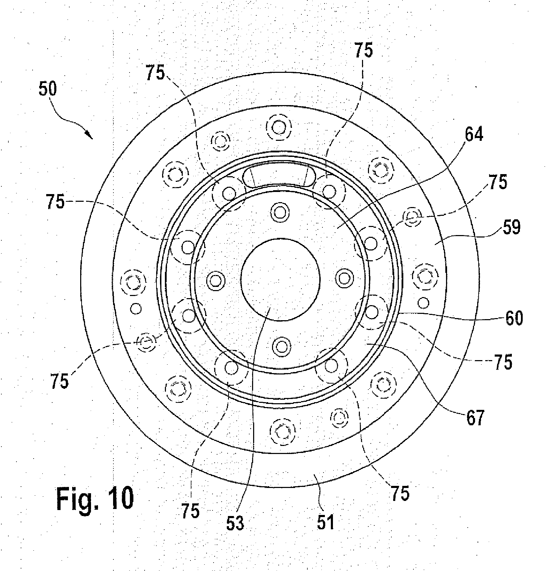

- Figur 10: eine Draufsicht auf die erfindungsgemäße Vorrichtung,

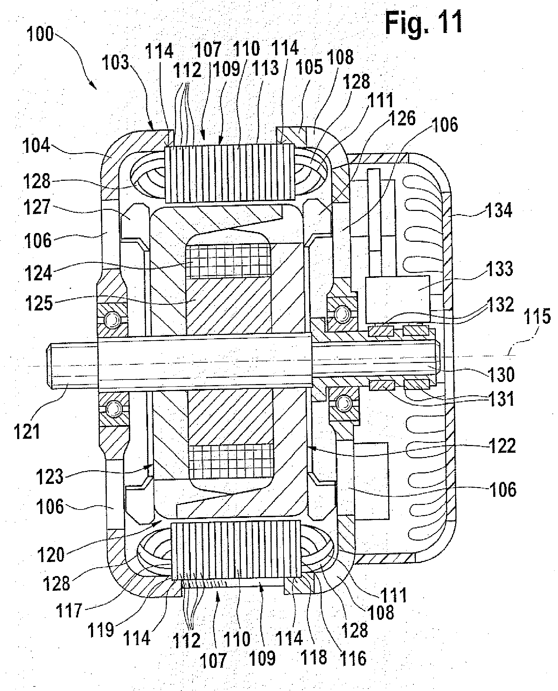

- Figur 11: ein Ausführungsbeispiel einer erfindungsgemäßen elektrischen Maschine in einer Schnittdarstellung und

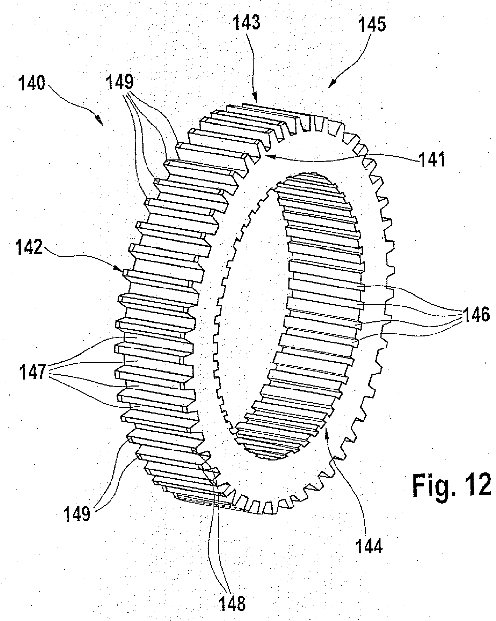

- Figur 12: ein weiteres Ausführungsbeispiel eines vorteilhaften Ständers.

### Ausführungsform(en) der Erfindung

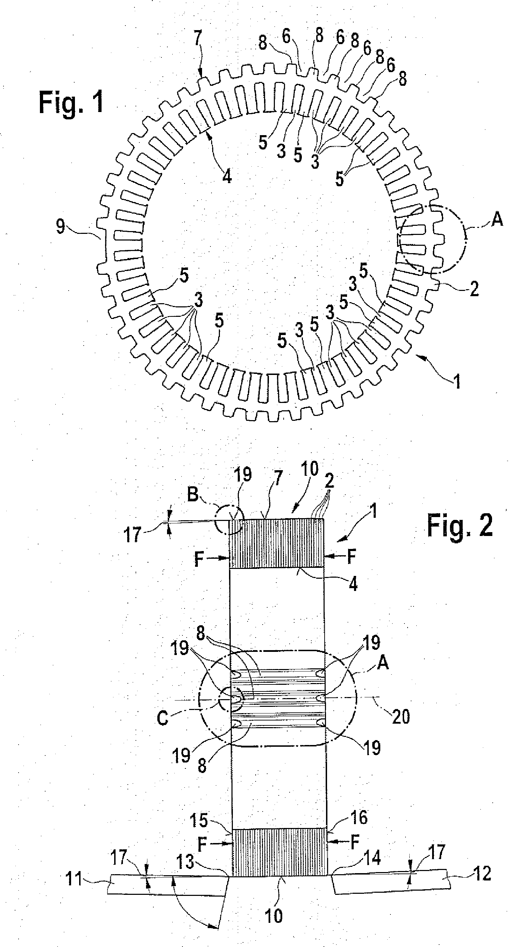

Die Figur 1 zeigt in einer Seitenansicht ein Ausführungsbeispiel eines erfindungsgemäßen Ständers 1, der in der sogenannten Flachpakettechnik hergestellt wurde, wobei in dieser Figur und in den Figuren 2 bis 7 und 12 eine (Ständer-)Wicklung nicht dargestellt ist.

Dabei wird aus streifenförmigen Lamellen 2 zunächst ein im Wesentlichen quaderförmiges Lamellenpaket gebildet und durch Rundbiegen in eine Ringform umgeformt. Die Lamellen 2 weisen Nutschlitze 3 auf der Innenseite 4 der Lamellen 2 auf, die jeweils beidseitig von jeweils einem Zahn 5 begrenzt werden, und Nutschlitze 6 auf der Außenseite 7, die beidseitig durch jeweils einen Zahn 8 begrenzt werden. Die Lamellen 2 weisen auf ihrer Außenseite 7 in der Reihe von Zähnen 8 eine Lücke 9 auf, die beispielsweise dazu genutzt werden kann, den Ständer in einem Gehäuse oder einem Lagerschild einer elektrischen Maschine, wie zum Beispiel ein Generator, zu positionieren.

Die Figur 2 stellt in einer Draufsicht den Ständer 1 aus der Figur 1 in einer Teilschnittdarstellung dar, wobei ein Bereich A, in der Figur 1 durch einen Kreis gekennzeichnet, nicht geschnitten dargestellt ist. In der Seitenansicht ist deutlich das den Ständer bildende Lamellenpaket 10 zu erkennen, welches von den Lamellen 2 gebildet wird. Im unteren Bereich sind zwei Schneidwerkzeuge 11 und 12 angedeutet, deren Schneide 13,14 jeweils auf eine der Stirnflächen 15,16 des Lamellenpakets 10 gerichtet ist. Die Schneidwerkzeuge 11,12 sind dabei jeweils in einem Winkel 17 zu der Außenseite 7 des Lamellenpakets 10 angeordnet, sodass bei einem Abschneidvorgang an einem Zahn 8 auf der Außenseite 7 die erfindungsgemäße Zentrierfläche 19 entsteht. Vorteilhafterweise sind die Schneiden 13 und 14 bogenförmig ausgebildet.

Figur 3 a) zeigt einen Ausschnitt B aus der Figur 2 in einer Detailansicht, wobei ein Teil des Lamellenpakets 10 mit einer daran ausgebildeten Zentrierfläche 19 gezeigt ist. Die Zentrierfläche 19 ist dabei in dem Winkel 17 zu der Außenseite 7 beziehungsweise der in Figur 2 dargestellten Achse 20 des Ständers ausgebildet. Zusätzlich zu der Zentrierfläche 19 ist außerdem eine optionale Fase 21 an der äußersten Lamelle 22 ausgebildet. Diese wird vorteilhafterweise ebenfalls durch einen Abschneidvorgang erstellt.

Der nicht-geschnittene Bereich A der Figur 2 zeigt in einer Draufsicht drei Zähne 8, an deren stirnseitigen Enden jeweils eine Zentrierfläche 19 ausgebildet ist. Die Figur 3b) zeigt in einer Detailansicht den in der Figur 2 mit einem Kreis C markierten Bereich, der das stirnseitige Ende des mittleren Zahns 8 zeigt. Von der Stirnfläche 15 aus ist zunächst die Fase 21 und anschließend die Zentrierfläche 19 ausgebildet. Aufgrund der Form des Zahns 8 entsteht dabei die konusartige Kontur 23 der Zentrierfläche 19.

Die Figur 4 zeigt den Bereich A aus der Figur 1 in einer vergrößerten Darstellung. Am Außenumfang 7 weisen die Zähne 8 die Zentrierfläche 19 und die optionale Fase 21 auf. Die Zentrierfläche 19 ermöglicht es, dass der Ständer 1 auf einfache Art und Weise in einer entsprechenden Aufnahme des Gehäuses oder eines Lagerschilds aufgenommen und darin zentriert werden kann, sodass der Ständer 1 äußerst exakt zu einem darin angeordneten Läufer und zu dem Gehäuse angeordnet ist. Das Herstellen der Zentrierfläche 19 durch ein Abschneiden mittels der Schneidwerkzeuge 11 und 12 hat den Vorteil, dass beim Schneidvorgang kein Grat oder Materialaufwürfe gebildet werden, da die Schneidwerkzeuge 11 und 12 ins Freie laufen. Durch die kegelförmige Zentrierfläche 19 wird ein Verkanten beim Einführen des Ständers, in zum Beispiel einen Lagerschild, verhindert, wobei der Winkel 17 vorteilhafterweise kleiner als 5 Grad eingestellt ist. Werden, wie in der Figur 2 dargestellt, nur zwei Schneidwerkzeuge 11 und 12 verwendet, so müssen diese und/oder der Ständer 1 drehbar gelagert sein, sodass die Zentrierfläche 19 am gesamten Außenumfang 7 des Ständers 1 hergestellt werden kann. Die Erfindung ist aber nicht darauf beschränkt, nur zwei Schneidwerkzeuge zu verwenden, vorteilhafterweise sind mehrere Schneidwerkzeuge über den Umfang des Ständers 1 verteilt angeordnet. Wird die Zentrierfläche 19 nicht kegelförmig sondern kreiszylinderförmig ausgebildet, so kann dies sowohl mit mehreren Schneidwerkzeugen als auch mit einem einzigen ringförmigen Schneidwerkzeug realisiert werden. Vorteilhafterweise wird das Lamellenpaket 10 vor dem Abschneidvorgang mit einer Vorspannkraft F, wie in Figur 2 dargestellt, beaufschlagt. Dadurch werden unzulässige plastische Verformungen, wie zum Beispiel ein Auffächern der Lamellen 2, oder eine Beschädigung beim Zurückfahren der Schneidwerkzeuge 11 und 12 vermieden.

Die Figur 5 zeigt in einer Schnittdarstellung einen Ausschnitt eines Gehäuses 30, das als Aufnahme für ein Lamellenpaket 31 dient, wobei eine Außenseite 32 des Lamellenpakets 31 mit einer Aufnahmefläche 33 des Gehäuses 30 zusammenwirkt. Beim Einschieben des Lamellenpakets 31 in Richtung des Pfeils 34 in das Gehäuse 30 kann es dabei geschehen, dass das Lamellenpaket 31 verkantet.

Um das Einführen und das Positionieren beziehungsweise Zentrieren eines Lamellenpakets in der Aufnahme 33 des Gehäuses 30 zu erleichtern, ist die erfindungsgemäße Zentrierfläche 19 aus den vorhergehenden Figuren nötig. In den Figuren 6 und 7 ist jeweils in einer Schnittdarstellung ein Ausschnitt des erfindungsgemäßen Ständers 1 dargestellt, wobei das Lamellenpaket 10 in der Figur 6 eine zylinderförmige Zentrierfläche 35 und das Lamellenpaket 10 der Figur 7 die kegelförmige Zentrierfläche 19 aufweist. Vorteilhafterweise wird zur Herstellung der kreiszylinderförmigen Zentrierfläche 35 eine einzige ringförmige Schneide verwendet, wobei vorteilhafterweise Lamellen 2 des Lamellenpakets 10 jeweils ganz von der Schneide durchdrungen werden. Bei einer kegelförmigen Ausführung der Zentrierfläche 19, dargestellt in Figur 7, ist dies nicht erforderlich, da die Schneide ins Freie läuft.

Die Figur 8 zeigt einen beispielhaften Verlauf eines Verfahrens zur Herstellung eines erfindungsgemäßen Ständers. In einem ersten Schritt 40 wird aus mehreren Lamellen ein Lamellenpaket gebildet, wobei die Lamellen bereits Innen- und/oder Außenzähne aufweisen. Im folgenden zweiten Schritt 41 wird eine gewünschte Anzahl von Wicklungen in die von den Zähnen gebildeten Nutschlitze eingefügt. In einem dritten Schritt 42 wird das Lamellenpaket mitsamt den Wicklungen rund gebogen, sodass sich eine Ringform ergibt. In einem vierten Schritt 43 werden die, nach dem Rundbiegen des Lamellenpakets gegenüberliegenden Enden der Lamellen in einem Fügeprozess miteinander verbunden. In einem letzten Schritt 44 wird durch Abschneiden eine erfindungsgemäße Zentrierfläche am Außenumfang des Lamellenpakets erstellt. Hierbei wird deutlich, dass die Herstellung der Zentrierfläche am Ende der Wertschöpfungskette steht, und somit Beschädigungen, die hier auftreten, zu entsprechend hohen Ausschusskosten führen und ein erfindungsgemäßes Abschneiden somit entsprechend bedeutend für den Herstellungsprozess ist.

Die Figuren 9 und 10 zeigen ein Ausführungsbeispiel einer erfindungsgemäßen Vorrichtung 50 zum Herstellen einer radialen Zentrierfläche an einem Außenumfang eines ringförmigen Lamellenpakets eines Ständers, wobei die Figur 9 die Vorrichtung 50 in einer Schnittdarstellung und die Figur 10 die Vorrichtung 50 in einer Draufsicht zeigt. Die Vorrichtung 50 weist eine kreiszylinderförmige Rundplatte 51 auf, in deren Mitte eine ebenfalls kreiszylinderförmige Öffnung 52 ausgebildet ist. In der Öffnung 52 ist ein Zentrierzapfen 53 angeordnet, der koaxial zu der Achse 54 der Grundplatte 51 nach oben von der Grundplatte 51 hervorsteht. Auf der Grundplatte 51 ist eine Zwischenplatte 55 koaxial dazu angeordnet, wobei die Zwischenplatte 55 eine Öffnung 56 aufweist, durch die der Zentrierzapfen 53 geführt ist. Dabei ist der Durchmesser der Zwischenplatte 55 kleiner ausgebildet, als der Durchmesser der Grundplatte 51. An ihrem Rand 57 weist die Zwischenplatte 55 eine Aufnahmeschulter 58 auf, an der ein kreiszylinderförmiges Schneidwerkzeug 59 mit einer ebenfalls kreiszylinderförmigen Schneide 60 angeordnet ist. Natürlich kann die Schneide 60 auch durch mehrere bogenförmige Schneiden gebildet werden. Durch die Aufnahmeschulter 58 wird die Schneide 59 mit Bezug auf die Achse 54 zentriert. Die Zwischenplatte 55 und das Schneidwerkzeug 59 sind mittels Schrauben 61 und 62, die über den Umfang verteilt angeordnet sind, mit der Grundplatte 51 verbunden.

Von dem Schneidwerkzeug 59 wird eine Vorspanneinrichtung 63 umschlossen. Diese weist eine Zentrierung 64 auf, deren Außenumfang 65 mit einer Innenseite eines Ständers beziehungsweise Lamellenpakets zusammenwirkt, sodass das Lamellenpaket an der Vorrichtung ausgerichtet wird. Die Zentrierung 64 weist eine Zentrieröffnung 66 auf, durch die der Zentrierzapfen 53 geführt ist. Die Vorspanneinrichtung 63 weist weiterhin ein kreiszylinderförmiges Vorspannelement 67 auf, an dessen Oberseite 68 eine ebenfalls kreiszylinderförmige Aussparung 69 ausgebildet ist. Die Zentrierung 64 ist dabei mittels Schrauben 70 an einer Bodenfläche 71 der Aussparung 69 befestigt. Das Vorspannelement 67 liegt mit seiner Außenseite 72 an einer Innenseite 73 des Schneidwerkzeugs 59 an. An seiner Unterseite 74 steht das Vorspannelement 67 mit über den Umfang verteilten Tellerfedern 75 in Verbindung, wobei zwischen der Unterseite 74 und einer Oberseite 76 der Zwischenplatte 55 ein Abstand besteht. Die Tellerfedern 75 sind dabei in der Zwischenplatte 55 und der Grundplatte 51 angeordnet. Das Vorspannelement 67 kann somit axial gegen die Federkraft der Tellerfedern 75 bewegt werden.

Eine Vorrichtung 50' mit einer Grundplatte 77, einer Zwischenplatte 78, einem Schneidwerkzeug 79, Tellerfedern 80 und einem Vorspannelement 81, deren Anordnung und Aufbau der Vorrichtung 50 entspricht, ist gespiegelt zu der Vorrichtung 50 angeordnet, wobei der Zentrierzapfen 53 in entsprechende Zentrieröffnungen 82,83 und 84 des Vorspannelements 81, der Zwischenplatte 78 und der Grundplatte 77 geführt ist. Die Schneidwerkzeuge 59 und 79 sind somit genau gegenüber zueinander ausgerichtet. Die Tellerfedern 80 sind hierbei in einem gespannten/belasteten Zustand dargestellt, wobei das Vorspannelement 81 keinen Abstand zu der Zwischenplatte 78 aufweist.

Zur Herstellung der erfindungsgemäßen Zentrierfläche wird ein ringförmiges Lamellenpaket zunächst auf die Vorspanneinrichtung 63 geschoben, sodass eine Stirnfläche auf der Oberseite 68 des Vorspannelements 67 aufliegt und die Zentrierung 64 mit einer Innenseite des Lamellenpakets zusammenwirkt. Aufgrund der entspannten Tellerfedern 75 befindet sich die Oberseite 68 zunächst oberhalb der Schneide 60 des Schneidwerkzeugs 59, sodass ein Teil des Lamellenpakets radial über die Schneide 60 herausragen kann. In einem zweiten Schritt wird die Vorrichtung 50' auf den Zentrierzapfen 53 aufgeschoben, bis die andere Stirnfläche des Lamellenpakets auf einer Oberseite 85 des Vorspannelements 81 aufliegt, wobei die Tellerfedern 80 ebenfalls entspannt sind.

Durch ein axiales Zusammenschieben der Vorrichtungen 50 und 50' werden die Lamellen des Lamellenpakets zunächst aufgrund der Vorspannelemente 81 und 67 axial vorgespannt, wobei die Tellerfedern 80 und 75 gespannt werden. Ist die das Zusammenführen ausübende Kraft stark genug, so werden die Vorspannelemente 81 und 67 so weit eingeschoben, sodass die Schneide 60 des Schneidwerkzeugs 59 und eine Schneide 86 des Schneidwerkzeugs 79 die Stirnflächen des Lamellenpakets zunächst berühren und dann einen Teil der Lamellen des Lamellenpakets durchdringen und dabei die erfindungsgemäße Zentrierfläche erstellen. Durch die Vorspannung werden unzulässige plastische Verformungen wie oben beschrieben vermieden.

Die Figur 11 zeigt in vereinfachter Form ein Ausführungsbeispiel einer elektrischen Maschine 100 in einer Längsschnittdarstellung, wobei die elektrische Maschine 100 als Wechselstrom-Synchrongenerator mit einem Klauenpolläufer 120 mit geregelter elektrischer Erregung eines Polrads, beispielsweise zum Einsatz in Kraftfahrzeugen, ausgebildet ist. Die elektrische Maschine 100 hat ein mehrteiliges Metallgehäuse 103, das unter anderem aus zwei Lagerschilden 104 und 105 gebildet wird, die an jeweils einer Stirnseite der elektrischen Maschine 100 angeordnet sind. Die Lagerschilde 104 und 105 sind topfförmig ausgebildet und weisen stirnseitige Aussparungen 106, umfangsseitige Aussparungen 107 und im Eckbereich befindliche Aussparungen 108 auf, die zur Führung von Kühlluft dienen.

Zwischen den beiden Lagerschilden 104 und 105 ist ein erfindungsgemäßer Ständer 109 angeordnet, der aus einem Lamellenpaket 110 und einer daran angeordneten mehrphasigen Ständerwicklung 111 besteht. Das Lamellenpaket 110 ist in bekannter Art und Weise aus einer Vielzahl von Blechlamellen 112 hergestellt. Die Ständerwicklung 111 ist in Wicklungsstränge gegliedert, welche in axial parallel zueinander verlaufenden, radial nach innen offenen Nuten des Lamellenpakets 110 untergebracht. Das Lamellenpaket 110 weist an seinem Außenumfang 113 radiale, erfindungsgemäße Zentrierflächen 114 auf, die sich parallel zur Rotationsachse 115 des Ständers 109 von den beiden Stirnseiten 116 und 117 aus erstrecken und zylinderförmig ausgebildet sind. An die Zentrierflächen 114 schließt sich jeweils stirnseitig unmittelbar eine ringförmige Fläche 118, 119 an, sodass die Lagerschilde 103 und 104 durch die beidseitigen Zentrierflächen 114 des Ständers 109 zueinander zentriert und der Ständer 109 über die Flächen 118,119 von den beiden Lagerschilden 104 und 105 axial fest eingespannt ist. Innerhalb des zylinderförmigen Lamellenpakets 110 ist der Klauenpolläufer 120 mit einer Läuferwelle 121 angeordnet und in den Lagerschilden 104 und 105 drehbar gelagert.

Die Läuferwelle 121 des Klauenpolläufers 120 trägt zwei gegensätzlich gepolte Polradhälften 122 und 123. Jede Polradhälfte 122, 123 besteht aus Eisen, ist massiv ausgebildet und weist entlang ihres Umfangs eine Vielzahl von sich in Achsrichtung erstreckenden Klauen auf, die im Wesentlichen trapezförmig geformt und mit gleichmäßiger Winkelteilung in Umfangsrichtung angeordnet sind. Beide Polradhälften 122, 123 sind so auf der Läuferwelle 121 angeordnet, dass sie sich einander gegenüberstehen und ihre klauenartig ausgebildeten Polfinger wechselseitig als Süd- und Nordpol ineinandergreifen. Sie überdecken die ringspulenförmige Erregerwicklung 124, die sich auf dem Polkern 125 befindet, der die beiden Polradhälften 122, 123 auf Abstand hält. An den axialen, nach außen zeigenden Endflächen der Polradhälften 122 und 123 sind Lüfter 126 und 127 angeordnet und mit den Polradhälften 122 beziehungsweise 123 drehfest befestigt. Die durch die Lüfter 126 und 127 erzeugten Luftströme treten axial durch die stirnseitigen Aussparungen 106 der Lagerschilde 104 und 105 in die elektrische Maschine 100 ein und durch die umfangsseitigen Aussparungen 107 der Lagerschilde 104 und 105 radial aus, wobei die Wickelköpfe 128 der Ständerwicklung 111 im radialen Kühlstrom liegen.

An einem der Antriebsseite 129 der Läuferwelle 121 gegenüberliegenden Ende 130 ist ein Schleifringpaar 131 angeordnet, welches zur Stromversorgung der Erregerwicklung 124 dient. Der Gleichstrom der Erregerwicklung 124 erzeugt ein zum Klauenpolläufer 120 stillstehendes Magnetfeld. Durch die Drehung des Klauenpolläufers 120 entsteht aber für den Ständer 109 ein magnetisches Drehfeld. Dieses Drehfeld rotiert mit synchroner Drehzahl wie der Klauenpolläufer 120 und induziert in jedem Strang der Ständerwicklung 111 eine Wechselspannung. Die einzelnen Strangwechselspannungen sind in dem gleichen Winkel (Phasenverschiebungswinkel) so zeitlich gegeneinander verschoben, wie die Stränge räumlich zueinander versetzt entlang des Ständerumfangs des Ständers 109 angeordnet sind. Beispielsweise sind für eine symmetrische dreisträngige Wicklung die drei sinusförmigen Wechselspannungen um 120° zeitlich zueinander verschoben. Das Gleiche gilt für Wechselströme.

Kohlenbürsten 132, die gegen die Oberfläche der Schleifringe 131 gedrückt werden, sind jeweils in einem Bürstenhalter gelagert, der zusammen mit einem Regler 133, der die in den Wicklungen induzierten Wechselspannungen auf eine von Drehzahl und Last unabhängige, konstante Spannung regelt, eine Einheit bildet.

Der von der Ständerwicklung 111 abgegebene Wechselstrom wird über eine Gleichrichterschaltung dem Bordnetz beispielsweise eines Kraftfahrzeugs zugeführt, wobei die Gleichrichteranordnung außen am Lagerschild 105 angeordnet ist. Die Gleichrichteranordnung sowie der Regler 133 sind von einer Schutzkappe 134, welche an dem Lagerschild 105 befestigt ist, abgedeckt.

Die Figur 12 zeigt in einer perspektivischen Darstellung ein weiteres Ausführungsbeispiel eines erfindungsgemäßen Ständers 140. Zum Herstellen eines solchen Ständers 140, der für eine elektrische Maschine, insbesondere für einen Wechselstrom-Synchrongenerator mit einem Klauenpolläufer für Kraftfahrzeuge, wie in Figur 11 dargestellt, vorgesehen ist, wird aus streifenförmigen Lamellen zunächst ein im Wesentlichen quaderförmiges Lamellenpaket gebildet, und in einem der folgenden Schritte durch Rundbiegen in eine Ringform umgeformt. Die Ringform dieses Ständers 140 beziehungsweise Ständereisens hat eine Axialrichtung, die einer Zylinderachse entspricht, und weist zwei axiale Stirnflächen 141,142 auf. Zunächst werden einzelne Blechlamellen aus einem Blechband ausgestanzt, bestehend aus einem Jochstreifen mit einer über die gesamte Lamellenlängsachse konstanten Jochhöhe und beidseitig dazu einander gegenüberliegend, rechtwinklig abstehenden Zahnreihen 143,144 mit unterschiedlicher Zahnlänge, wobei in denjenigen Nuten des Lamellenpakets, die von den benachbarten längeren Zähnen gebildet werden, später eine Wicklung untergebracht wird. Nach dem Ausstanzen werden die im Wesentlichen quaderförmigen und streifenförmigen Lamellen durch Aneinanderlegen mehrerer dieser Lamellen zu einem im Wesentlichen quaderförmigen Lamellenpaket gestapelt und genau ausgerichtet, sodass sich die Konturen der Lamellen möglichst exakt decken. Weiterhin wird dieses so geformte Lamellenpaket unter Beaufschlagung mit einer definierten Kraft in Stapelrichtung gegeneinander spaltfrei gepresst, um anschließend die Lamellen an geeigneter, vorbestimmter Position durch eine geeignete Verbindungstechnik miteinander zu verbinden, vorzugsweise durch Schweißen. Insbesondere eignet sich hier das so genannte Laserstrahlschweißen, da dies ein verzugsfreies Lamellenpaket bei geringstmöglichem Wärmeertrag ergibt. Durch diesen Verbindungsvorgang entsteht ein zusammenhängendes Lamellenpaket, das den Ständerkern 145 bildet, der auf einer Seite für einen Ständer übliche, zueinander ausgerichtete Zähne und Nuten aufweist. Eine vorgefertigte Kernwicklung (hier nicht dargestellt) liegt beispielsweise in etwa ebener Form vor und wird in die Nuten des im Wesentlichen flachen Kerns anschließend eingelegt. Die Baurippe aus Kern und Kernwicklung wird anschließend so rundgebogen, dass ein hohlzylindrischer Ständer mit radial nach innen gerichteten Nuten 146 und/oder mit radial nach außen gerichteten Nuten 147 entsteht. Das Rundbiegen des Lamellenpakets erfolgt unter einer axialen Vorspannung. Dadurch werden unzulässige plastische Verformungen, wie zum Bauspiel Auffächern und Wellen der Lamellen, vermieden. Nach dem Rundbiegen des im Wesentlichen quaderförmigen Lamellenpakets unter axialer Vorspannung stehen sich die beiden Endflächen direkt gegenüber und liegen im Wesentlichen aneinander an. In diesem bereits ringförmigen Zustand des Lamellenpakets werden die beiden zueinander gerichteten Endflächen des Lamellenpakets miteinander verbunden. Dieser Verbindungsprozess erfolgt vorzugsweise mittels Laserschweißen. Diese Schweißverbindung verläuft beispielsweise in Axialrichtung am Außenumfang des Lamellenpakets.

Der Ständer 140 umfasst ein Ständerpaket und eine Ständerwicklung (hier nicht dargestellt), die vom Ständerpaket aufgenommen wird. Die Ständerwicklung ist vom Ständerpaket durch eine Isolierung, die in die Nuten eingebaut ist und an der Nutwand anliegt, elektrisch getrennt. Die Ständerwicklung ist mehrpolig und mehrphasig, wobei die Stränge symmetrisch auf die Nuten verteilt sind, als Spulenwicklung ausgeführt und jeweils in einzelne Wicklungsabschnitte unterteilt, die nach einem vorbestimmten Muster, das sich regelmäßig entlang des Umfangs wiederholt, geformt sind. Ein Wicklungsabschnitt ist im Wesentlichen in einem parallel zur Achsrichtung entlang erstreckten Oval ausgebildet, um das ein elektrischer Leiter mit einer vorbestimmten Windungszahl geformt ist. Dabei können die eine Nut füllende Leiter lose aufeinander und nebeneinander liegen beziehungsweise regelmäßig angeordnet, beispielsweise in Nuttiefenrichtung aufeinander gestapelt sein. Der Leiter besteht aus meist lackisoliertem Wickeldraht. Dabei kann der Wickeldraht für die eine Nut füllende Leiter eine einheitliche Querschnittsform aufweisen, beispielsweise einen kreisrunden oder einen im Wesentlichen rechteckförmigen Querschnitt. Weiterhin kann der Wickeldraht für die eine Nut füllenden Leiter eine auch uneinheitliche Querschnittsform aufweisen. Beispielsweise kann der Wickeldraht im Anfangszustand einen kreisrunden Querschnitt aufweisen und in einem späteren Fertigungsschritt im Bereich der Nuten des Lamellenpakets zusammen mit den nutfüllenden Drähten auf die Nutform des runden Ständers verprägt werden und dadurch einen kreisrunden bis vielgestaltigen Querschnitt aufweisen. Dabei können die in der Nut liegenden Drähte verschiedengestaltige, das heißt voneinander abweichende Querschnittsformen aufweisen.

Die Wicklungsabschnitte werden durch die Nutöffnungen in die Nuten geführt, und zwar in Nutpaare, die um ca. eine Polteilung voneinander entfernt liegen, was beispielsweise bei einem zwölfpoligen Drehstromständer mit 36 Nuten drei Nutteilungen entspricht. Aufgrund der erhöhten Anforderungen hinsichtlich des Strombedarfs, die an heutige Generatoren gestellt werden, bedingen die großen Ströme auch einen großen Leiterquerschnitt. Damit die Herstellung und das Montieren der Wicklung nicht unnötig erschwert wird und außerdem zur Vermeidung von zusätzlichen Verlusten, die in großen Leiterquerschnitten auftreten, werden unterteilte Leiter benutzt, in Form von mehreren parallel verlaufenden (meist zwei) Drähten.

An dem Ständer 140 sind ebenfalls erfindungsgemäße, durch Abschneiden erstellte Zentrierflächen 148 und 149 ausgebildet.

## Patentansprüche

1. Verfahren zum Herstellen mindestens einer radialen Zentrierfläche an einem Außenumfang eines ringförmigen Lamellenpakets eines Ständers, wobei die Zentrierfläche (19) durch Abschneiden erstellt wird, **dadurch gekennzeichnet, dass** das Lamellenpaket (10) vor dem Abschneiden axial vorgespannt wird.

2. Verfahren nach Anspruch 1, **dadurch gekennzeichnet, dass** zum Abschneiden mindestens ein Schneidwerkzeug (11,12; 59,79) mit mindestens einer ring- oder bogenförmigen Schneide (13,17; 60,86) verwendet wird.

3. Verfahren nach Anspruch 2, **dadurch gekennzeichnet, dass** das Schneidwerkzeug (11,12; 59,79) parallel zu einer Achse (20; 54) geführt wird, sodass eine kreiszylinderförmige Zentrierfläche (35) entsteht.

4. Verfahren nach Anspruch 2 oder 3, **dadurch gekennzeichnet, dass** das Schneidwerkzeug (11,12; 59,79) bei der Herstellung der kreiszylindrischen Zentrierfläche (35) so weit bewegt wird, dass mindestens eine Lamelle (2) des Lamellenpakets (10) von der Schneide (13,17; 60,86) vollständig durchdrungen wird.

5. Verfahren nach einem der vorhergehenden Ansprüche,
**dadurch gekennzeichnet, dass** das Schneidwerkzeug (11,12) in einem Winkel (17) zu der Achse (20) des Lamellenpakets (10) geführt wird, sodass eine kegelförmige Zentrierfläche (19) entsteht.

6. Verfahren nach Anspruch 5, **dadurch gekennzeichnet, dass** der Winkel (17) kleiner als 5 Grad eingestellt wird.

7. Ständer für eine elektrische Maschine, mit einem ringförmigen Lamellenpaket, **gekennzeichnet durch** mindestens eine durch Abschneiden des axial vorgespannten Lamellenpakets (10) hergestellte, radiale Zentrierfläche (19,35).

8. Elektrische Maschine mit zwei Lagerschilden und mit einem Ständer nach Anspruch 7, **dadurch gekennzeichnet, dass** der Ständer (109) axial zwischen den Lagerschilden (104, 105) eingespannt ist.

9. Vorrichtung zum Herstellen einer radialen Zentrierfläche an einem Außenumfang eines ringförmigen Lamellenpakets eines Ständers, das axiale Stirnflächen aufweist, **gekennzeichnet durch** eine Axial-Vorspanneinrichtung (63) für das Lamellenpaket (10) und ein zum Lamellenpaket (10) im Wesentlichen axial bewegbares Schneidwerkzeug (11,12; 59,79), das mindestens eine Schneide (13,17; 60,86) aufweist, die gegen eine der Stirnseiten (15,16) des Lamellenpakets (10) gerichtet ist.

10. Vorrichtung nach Anspruch 9, **dadurch gekennzeichnet,**
**dass** die Schneide (60,86) ringförmig ausgebildet ist.

11. Vorrichtung nach Anspruch 9 oder 10, **dadurch gekennzeichnet, dass** die Schneide (13,17; 60,86) bogenförmig ausgebildet ist.

12. Vorrichtung nach einem der Ansprüche 9, 10 oder 11,
**dadurch gekennzeichnet, dass** eine Ständeraufnahme und/oder das Schneidwerkzeug (11,12; 59,79) um die Achse des Lamellenpakets (10) drehbar gelagert ist.

13. Vorrichtung nach einem der Ansprüche 9 bis 12, **dadurch gekennzeichnet, dass** eine Schneidwerkzeugzuführung in einem Winkel von weniger als 5° gegenüber der Rotationsachse (20) des Lamellenpakets (10) angeordnet ist.

## Claims

1. Method for producing at least one radial centring surface on an outer circumference of an annular lamella pack of a stator, the centring surface (19) being produced by cutting, **characterized in that** the lamella pack (10) is axially pretensioned before cutting.

2. Method according to claim 1, **characterized in that** at least one cutting tool (11, 12; 59, 79) with at least one annular or arcuate cutting edge (13, 17; 60, 86) is used for cutting.

3. Method according to claim 2, **characterized in that** the cutting tool (11, 12; 59, 79) is guided parallel to an axis (20; 54) so that a circular cylindrical centring surface (35) is produced.

4. Method according to claim 2 or 3, **characterized in that** the cutting tool (11, 12; 59, 79) is moved during the production of the circular cylindrical centring surface (35) to such an extent that at least one lamella (2) of the lamella packet (10) is completely penetrated by the cutting edge (13, 17; 60, 86).

5. Method according to any one of the preceding claims, **characterized in that** the cutting tool (11, 12) is guided at an angle (17) to the axis (20) of the lamella pack (10) so as to form a conical centering surface (19).

6. Method according to claim 5, **characterized in that** the angle (17) is set less than 5 degrees.

7. Stator for an electric machine, having an annular lamella pack, **characterized by** at least one radial centring surface (19, 35) produced by cutting off the axially pretensioned lamella pack (10).

8. Electric machine having two bearing shields and having a stator according to claim 7, **characterized in that** the stator (109) is clamped axially between the bearing shields (104, 105).

9. Device for producing a radial centring surface on an outer circumference of an annular lamella pack of a stator which has axial end faces, **characterized by** an axial pretensioning device (63) for the lamella pack (10) and a cutting tool (11, 12; 59, 79) which is essentially axially movable relative to the lamella pack (10) and has at least one cutting edge (13, 17; 60, 86) which is directed towards one of the end faces (15, 16) of the lamella pack (10).

10. Device according to claim 9, **characterized in that** the cutting edge (60, 86) is annular.

11. Device according to claim 9 or 10, **characterized in that** the cutting edge (13, 17; 60, 86) is arcuate.

12. Device according to any one of claims 9, 10 or 11, **characterized in that** a stand receptacle and/or the cutting tool (11, 12; 59, 79) is mounted rotatably about the axis of the lamella pack (10).

13. Device according to any one of claims 9 to 12, **characterized in that** a cutting tool feed is arranged at an angle of less than 5° with respect to the axis of rotation (20) of the lamella pack (10).

## Revendications

1. Procédé pour fabriquer au moins une surface de centrage radiale sur une circonférence extérieure d'un empilement de lamelles annulaire d'un stator, dans lequel la surface de centrage (19) est créée par une découpe, **caractérisé en ce que** l'empilement de lamelles (10) est préchargé axialement avant la découpe.

2. Procédé selon la revendication 1, **caractérisé en ce qu'**au moins un outil de coupe (11, 12 ; 59, 79) ayant au moins une arête tranchante annulaire ou en arc (13, 17 ; 60, 86) est utilisé pour la découpe.

3. Procédé selon la revendication 2, **caractérisé en ce que** l'outil de coupe (11, 12 ; 59, 79) est guidé parallèlement à un axe (20 ; 54) de sorte qu'une surface de centrage cylindrique circulaire (35) est créée.

4. Procédé selon la revendication 2 ou 3, **caractérisé en ce que** l'outil de coupe (11, 12 ; 59, 79) est déplacé lors de la création de la surface de centrage cylindrique circulaire (35) sur une distance telle qu'au moins une lamelle (2) de l'empilement de lamelles (10) est entièrement traversée par l'arête tranchante (13, 17 ; 60, 86).

5. Procédé selon l'une des revendications précédentes, **caractérisé en ce que** l'outil de coupe (11, 12) est guidé à un angle (17) par rapport à l'axe (20) de l'empilement de lamelles (10), de sorte une surface de centrage conique (19) est créée.

6. Procédé selon la revendication 5, **caractérisé en ce que** l'angle (17) est réglé de manière à être inférieur à 5 degrés.

7. Stator pour une machine électrique, comportant un empilement de lamelles annulaire, **caractérisé par** au moins une surface de centrage radiale (19, 35), fabriquée en découpant l'empilement de lamelles (10) préchargé axialement.

8. Machine électrique comportant deux flasques et un stator selon la revendication 7, **caractérisée en ce que** le stator (109) est serré axialement entre les flasques (104, 105).

9. Dispositif pour fabriquer une surface de centrage radiale sur une circonférence extérieure d'un empilement de lamelles annulaire d'un stator comportant des faces avant **caractérisé par** un dispositif de précharge axiale (63) pour l'empilement de lamelles (10) et un outil de coupe (11, 12 ; 59, 79) mobile de manière sensiblement axiale par rapport à l'empilement de lamelles (10) et comportant au moins une arête tranchante (13, 17 ; 60, 86) qui est dirigée vers l'une des faces avant (15, 16) de l'empilement de lamelles (10).

10. Dispositif selon la revendication 9, **caractérisé en ce que** l'arête tranchante (60, 86) est formée annulaire.

11. Dispositif selon la revendication 9 ou 10, **caractérisé en ce que** l'arête tranchante (13, 17 ; 60, 86) est formée en arc.

12. Dispositif selon l'une des revendications 9, 10 ou 11, **caractérisé en ce qu'**un logement de stator et/ou l'outil de coupe (11, 12 ; 59, 79) est monté de façon à pouvoir tourner autour de l'axe de l'empilement de lamelles (10).

13. Dispositif selon l'une des revendications 9 à 12, **caractérisé en ce qu'**un guide d'outil de coupe est agencé à un angle inférieur à 5° par rapport à l'axe de rotation (20) de l'empilement de lamelles (10).
